**Europäisches Patentamt**

(19) **European Patent Office**

**Office européen des brevets**

(11) Veröffentlichungsnummer: **0 105 960**
**B1**

(12) # EUROPÄISCHE PATENTSCHRIFT

(45) Veröffentlichungstag der Patentschrift:
28.01.87

(51) Int. Cl.⁴: **C 03 B 37/16**

(21) Anmeldenummer: **82109502.3**

(22) Anmeldetag: **14.10.82**

(54) Einrichtung zum Entfernen der Primärschutzschicht von Lichtwellenleitern.

(43) Veröffentlichungstag der Anmeldung:
25.04.84 Patentblatt 84/17

(45) Bekanntmachung des Hinweises auf die Patenterteilung:
28.01.87 Patentblatt 87/5

(84) Benannte Vertragsstaaten:
DE FR GB NL SE

(56) Entgegenhaltungen:
DE - A - 2 540 933
FR - A - 1 413 713
GB - A - 714 175
US - A - 2 024 591
US - A - 3 247 571
US - A - 3 587 673

PATENTS ABSTRACTS OF JAPAN, Band 5, Nr.
26(P-49)(698), 17. Febuar 1981, Seite 46P49;

(73) Patentinhaber: **ANT Nachrichtentechnik GmbH,
Gerberstrasse 33, D-7150 Backnang (DE)**

(72) Erfinder: **Kindermann, Richard, Hamburgerstrasse 8,
D-7150 Backnang (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

## Beschreibung

Die Erfindung betrifft eine Einrichtung gemäss dem Oberbegriff des Patentanspruchs 1 bzw. 2. Eine solche Einrichtung ist bekannt aus JP-A-55 151 605.

Primärschutzschichten von Lichtwellenleitern wurden bisher mit oft gesundheitsschädlichen Abbeizmitteln, beispielsweise Methylenchlorid mit Methanol, entfernt. Diese Abbeizmittel führen etwa bei nicht ausreichender Neutralisation zu einer Veränderung der Eigenschaften der Lichtwellenleiter im Oberflächenbereich, was sogar zum Bruch der Lichtwellenleiter führen kann, insbesondere im Bereich der späteren Trennstelle zwischen der gebeizten und nicht gebeizten Schutzschicht. Bei der Einrichtung gemäss JP-A-55 151 605 wird der zu bearbeitende Lichtwellenleiter zwischen zwei gegenläufig rotierenden Bürsten aus Plastik, Gummi oder organischer Substanz geführt. Die Bürsten dienen dort auch dazu, ein Lösungsmittel auf die Primärschutzschicht aufzutragen und diese aufzuweichen, damit diese abgestreift werden kann. Es treten somit auch hier die bereits geschilderten Nachteile der Abbeizmittel auf.

Inzwischen ist auf die mechanische Entfernbarkeit spezieller Acrylprimärschutzschichten hingewiesen worden (International Fiber Optics and Communications, Vol. 3, No. 3/4, S. 5, 1. Spalte, 1982). Ausserdem ist aus «Elektronikpraxis», Nr. 8, S. 102, 1982, eine Abisolierbox bekannt, die es gestattet, Lichtwellenleiter zu verarbeiten. Bei dieser Abisolierbox sind auswechselbare Schneidmesser in der Art eines Kameraverschlusses angeordnet. Diese Abisolierbox mit Schneidmessern ist sehr aufwendig aufgebaut und wegen ihrer Baugrösse an manchen Montageplätzen, z.B. in Kabelschächten, nicht einsetzbar. Des weiteren ist sie mit anderen Kabelbearbeitungseinheiten, z.B. Spleissgeräten, nicht integrierbar.

Aufgabe der Erfindung ist es daher, eine Einrichtung eingangs genannter Art derart auszubilden, dass die Primärschutzschicht einfach und sauber ohne Verletzung der Lichtwellenleiter und ohne Verwendung zusätzlicher Lösungsmittel entfernt werden kann.

Erfindungsgemäss wird diese Aufgabe durch die kennzeichnenden Merkmale der Patentansprüche 1 oder 2 gelöst.

In den Unteransprüchen sind vorteilhafte Ausgestaltungen der erfindungsgemässen Einrichtung angegeben.

Die Erfindung besitzt den Vorteil, dass keine gesundheitsschädlichen Abbeizmittel mehr verwendet werden müssen. Die Bearbeitungszeit für das Entfernen der Primärschutzschicht ist gegenüber dem Abbeizvorgang etwa um den Faktor 4 kürzer. Mit der Erfindung lässt sich ein einfaches, robustes, wartungsfreies und billiges Gerät aufbauen, das sich mit anderen Bearbeitungseinheiten für Lichtwellenleiter, beispielsweise Spleissplätze, integrieren lässt. Bei der Integrierung in automatischen bzw. halbautomatischen Spleissplätzen lässt sich die Spleisszeit erheblich verkürzen. Da die Lichtwellenleiter bei der erfindungsgemässen Einrichtung nur auf Zug beansprucht werden, ist die Bruchgefahr sehr stark reduziert.

Anhand der Zeichnungen wird die Erfindung nun weiter erläutert. Es zeigen

Fig. 1 eine Prinzipdarstellung der Bürsten mit einem eingeführten Lichtwellenleiter im Längsschnitt,

Fig. 2 dieselbe Prinzipdarstellung in einer Draufsicht,

Fig. 3 einen Ausschnitt aus einer Bürste mit Darstellung der Schleifkante und

Fig. 4 Kunststoffwalzen mit eingelagerten Schleifteilchen.

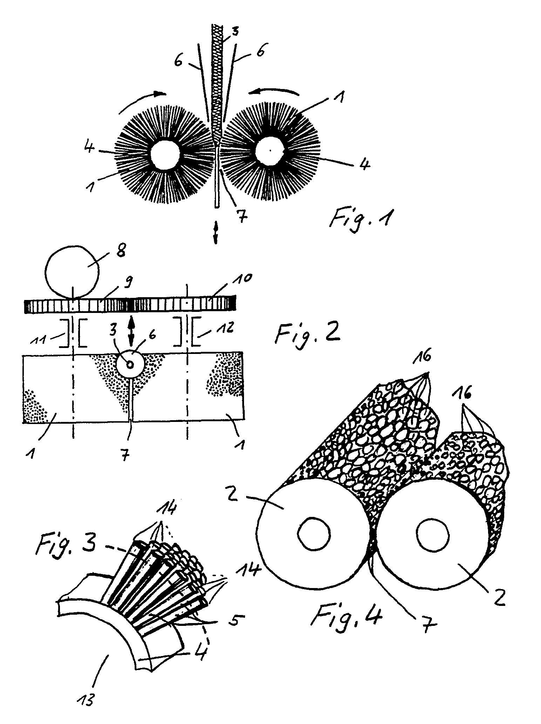

In Fig. 1 sind zwei Bürsten 1 dargestellt, die gegeneinander rotieren. In den Luftspalt 7 an den Stirnseiten der Bürsten 1 wird von oben durch eine Einführungshülse 6 ein zu bearbeitender Lichtwellenleiter 3 eingeführt. Die Einführungshülse 6, in Fig. 1 als Trichter mit linearer Steigung ausgebildet, dient zur Führung des Lichtwellenleiters 3 tangential zwischen den rotierenden Bürsten 1. Der Einführungtrichter 6 kann auch ein exponentielles oder ein anderes stetiges Profil aufweisen. Er sollte eine möglichst grosse Einführungsöffnung aufweisen, ca. 5 bis 6 mm im Durchmesser, und an der Austrittsöffnung dem Durchmesser des Lichtwellenleiters 3 mit Primärschutzschicht angepasst sein.

Wichtig ist, dass die Einführungshülse 6 keine Querrillen aufweist, da sie sich beim Vorhandensein von Querrillen bei der Einführung der Lichtwellenleiter darin verfangen kann. Die Mittelachse der Einführungshülse 6 muss mittig zum Luftspalt zwischen den Bürsten 1 liegen. Der Luftspalt 7 zwischen den Bürsten 1 wird zweckmässigerweise so gewählt, dass die Bürstenenden den Grund der Primärschutzschicht der Lichtwellenleiter 3 sicher erreichen. Für den Mindestabstand der Bürsten 1 ist also der Durchmesser des Lichtwellenleiters 3 ohne Primärschutzschicht zu wählen. Ein Überkämmen der Bürsten 1 soll allerdings vermieden werden, da durch ein Überkämmen die Standzeit der Bürsten erheblich verringert wird und die Antriebsleitung für die Rotation der Bürsten bei Überkämmen um den Faktor 4 bis 5 erhöht werden muss.

Die Bürsten 1 für ein Ausführungsbeispiel bestehen aus einem Zylinderkern 4, der dicht gepackte Besatzdrähte 5 in Richtung der Flächennormalen des Zylinderkerns 4 aufweist. Als Besatzdrähte eignen sich Drähte aus V2A in den Stärken 0,06 bis 0,1 mm Durchmesser. Als Drehzahl für die Bürsten hat sich ein Wert zwischen 4 und $8 \times 10^3$ Umdrehungen pro Minute als günstig erwiesen.

In Fig. 2 sind die zylindrischen Bürsten 1 mit den Antriebselementen in einer Draufsicht dargestellt. Ein Motor 8 treibt zwei Zahnräder 9 und 10. Um einen möglichst kleinen Reibungsfaktor und einen geräuscharmen Lauf zu erhalten, verwendet man vorzugsweise Kunststoffräder, beispielsweise aus Delrin. Die Motorwelle trägt das erste Zahnrad 9 - Antriebsrad - und über ein festes Lager 11 die linke Bürste 1. Das zweite Zahnrad 10 wird vom ersten Zahnrad 9 angetrieben. Auf seiner Achse ist über ein bewegliches Lager 12 die rechte Bürste 1 angebracht. Die Bürsten 1 rotieren so gegenläufig. Die Durchmesser der Bürsten sind ca. 0,2 mm grösser als der Teilkreisdurchmesser der Zahnräder gewählt. Als Modul wird ein Wert von 0,7 gewählt, um genügend Verstellmöglichkeit für den Luftspalt 7 zu erhalten. Die Einführungshülse 6 ist über der Bürstenbreite beweglich angeordnet, vgl. Pfeil in Fig. 2. Die Standzeit der Bürsten lässt sich dadurch erheblich erhöhen. Zwischen den gegenläufigen Bürsten wird der Lichtwellenleiter 3 durch die Einführungshülse 6 tangential geführt. Die Primärschutzschicht wird dabei so weit vom Lichtleiter entfernt, wie dieser über die Engstelle zwischen den beiden Bürsten - Luftspalt 7 - von letzteren gezogen wird. Beim Herausziehen des Lichtwellenleiters aus der Einführungshülse 6 werden etwa noch vorhandene Restteile der Schutzschicht als auch Staubteile sauber entfernt. Der abgebürstete Abrieb wird durch die Bürsten von der Einführungshülse weg auf den Boden geschleudert und kann dort leicht entfernt werden.

In Fig. 3 ist eine Bürste in einem Ausschnitt dargestellt. Die Bürste 1 ist zentrisch zu ihrer Antriebswelle 13, auf der der Zylinderkern 4 sitzt, überschliffen. Durch dieses Überschleifen bilden sich an den Enden der Besatzdrähte 5 scharfe Kanten 14. Durch das Überschleifen werden einerseits gute Rundlaufeigenschaften und damit eine gleichmässige Abnutzung der Bürsten erreicht und zum anderen sorgen die scharfen Kanten 14 für einen Schab- oder Ziehklingeneffekt, der die Entfernung der Schutzschicht in kurzer Zeit, ca. 2 bis 3 Sekunden, ermöglicht.

Eine Einbettung der Besatzdrähte in elastisches Material 15, Kunststoff, o.ä., mit Ausnahme der freien Enden, dient zur besseren Fixierung (in Fig. 3 gestrichelt dargestellt). Beim Überschleifen kann so ein Ausweichen der Besatzdrähte 5 vermieden werden und eventuelle Fertigungsmängel bei der Herstellung der Bürsten, z.B. verschiedene Länge der Besatzdrähte, können ausgeschaltet werden.

Anstelle der Bürsten 1 können auch Schleifwalzen 2, wie in Fig. 4 dargestellt, verwendet werden. Die Schleifwalzen bestehen beispielsweise aus elastischen Kunststoffwalzen, in die Schleifteilchen 16 eingelagert sind. Wegen der Elastizität solcher Schleifwalzen kann der Luftspalt 7 kleiner gewählt werden als der Durchmesser des schutzschichtfreien Lichtwellenleiters. Es ist auch möglich sowohl die Bürsten 1 als auch die Schleifwalzen in Segmente zu unterteilen und an den Trennstellen der Segmente Bürstkanten oder Schleifkanten vorzusehen.

**Patentansprüche**

1. Einrichtung zum Entfernen der Primärschutzschicht von Lichtwellenleitern (3), bestehend aus zwei gegenläufig rotierenden Bürsten (1), zwischen denen der zu bearbeitende Lichtwellenleiter (3) geführt wird, dadurch gekennzeichnet, dass die Bürsten (1) aus Metalldrähten (5) bestehen, und dass die Bürsten (1) bezüglich der Primärschutzschicht des Lichtwellenleiters (3) derart angeordnet sind, dass letztere allein durch die Bürstenenden mechanisch abgebürstet wird.

2. Einrichtung zum Entfernen der Primärschutzschicht von Lichtwellenleitern (3), bestehend aus zwei gegenläufig rotierenden Walzen (2), zwischen denen der zu bearbeitende Lichtwellenleiter (3) geführt wird, dadurch gekennzeichnet, dass in die Walzen (2) Schleifteilchen eingelagert sind, und dass die Walzen (2) bezüglich der Primärschutzschicht des Lichtwellenleiters (3) derart angeordnet sind, dass letztere allein durch die Schleifteilchen in den Walzen (2) abgeschliffen wird.

3. Einrichtung nach Anspruch 1, dadurch gekennzeichnet, dass die Metalldrähte (5) der Bürsten (1) mit Ausnahme ihrer frei nach aussen ragenden Enden in elastisches Material eingelagert sind.

4. Einrichtung nach Anspruch 1 oder 3, dadurch gekennzeichnet, dass die Bürsten (1) zentrisch zu ihren Antriebswellen überschliffen sind.

5. Einrichtung nach Anspruch 2, dadurch gekennzeichnet, dass die Walzen (2), in die die Schleifteilchen eingelagert sind, aus Kunststoff bestehen und elastisch ausgebildet sind.

6. Einrichtung nach einem der Ansprüche 1 bis 5, dadurch gekennzeichnet, dass zur Zuführung der Lichtwellenleiter (3) an die Bürsten (1) oder Schleifwalzen (2) eine Einführungshülse (6) vorgesehen ist.

7. Einrichtung nach Anspruch 6, dadurch gekennzeichnet, dass die Einführungshülse (6) mittig zum Luftspalt (7) zwischen den Bürsten (1) oder Schleifwalzen (2) angeordnet ist.

**Claims**

1. Apparatus for removing the primary protective layer of optical waveguides (3), comprising two oppositely rotating brushes (1) between which the optical waveguide (3) to be processed is guided, characterized in that the brushes (1) are composed of metal wires (5) and, with respect to the primary protective layer of the optical waveguide (3), the brushes (1) are arranged in such a manner that the protective layer is mechanically brushed off solely by the ends of the brushes.

2. Apparatus for removing the primary protective layer of optical waveguides (3), comprising two oppositely rotating rollers (2) between which the optical waveguide (3) to be processed is guided, characterized in that grinding particles are embedded in the rollers (2) and, with respect to the primary protective layer of the optical waveguide (3), the rollers (2) are arranged in such a manner that the primary protective layer is ground away solely by the grinding particles in the rollers (2).

3. Apparatus according to claim 1, characterized in that, except for their freely outwardly projecting ends, the metal wires (5) of the brushes (1) are embedded in elastic material.

4. Apparatus according to claim 1 or 3, characterized in that the brushes (1) are ground centrically to their drive shafts.

5. Apparatus according to claim 2, characterized in that the rollers (2) in which grinding particles are embedded are made of plastic and are elastic.

6. Apparatus according to one of claims 1 to 5, characterized in that an introduction sleeve (6) is provided to bring the optical waveguides (3) to the brushes (1).

7. Apparatus according to claim 6, characterized in that the introduction sleeve (6) is disposed in the center of the air gap (7) between the brushes (1) or the grinding rollers (2).

**Revendications**

1. Dispositif pour l'élimination de la couche primaire de protection de guides d'ondes optiques (3), constitué par deux brosses (1) tournant en sens inverse et entre lesquelles le guide d'ondes optique (3) à traiter est guidé, ledit dispositif étant caractérisé en ce que les brosses (1) sont constituées par des fils métalliques (5); et les brosses (1) sont disposées par rapport à la couche primaire de protection du guide d'ondes optique (3) de façon que ce dernier est brossé mécaniquement par les seules extrémités de brosse.

2. Dispositif pour l'élimination de la couche primaire de protection de guides d'ondes optiques (3), constitué par deux rouleaux (2) tournant en sens inverse et entre lesquels le guide d'ondes optique (3) à traiter est guidé, ledit dispositif étant caractérisé en ce que des particules abrasives sont incorporées aux rouleaux (2); et les rouleaux (2) sont disposés par rapport à la couche primaire de protection du guide d'ondes optique (3) de façon que ce dernier soit meulé par les seules particules abrasives des rouleaux (2).

3. Dispositif selon revendication 1, caractérisé en ce que les fils métalliques (5) des brosses (1) sont incorporés dans un matériau élastique, à l'exception de leurs extrémités libres en saillie vers l'extérieur.

4. Dispositif selon une des revendications 1 ou 3, caractérisé en ce que les brosses (1) sont meulées concentriquement à leur arbre moteur.

5. Dispositif selon revendication 2, caractérisé en ce que les rouleaux (2) dans lesquels les particules abrasives sont incorporées sont réalisés dans une matière plastique et élastiques.

6. Dispositif selon une quelconque des revendications 1 à 5, caractérisé par un manchon (6) d'introduction du guide d'ondes optique (3) entre les brosses (1) ou les rouleaux abrasifs (2).

7. Dispositif selon revendication 6, caractérisé en ce que le manchon d'introduction (6) est centré par rapport à l'interstice (7) des brosses (1) ou des rouleaux abrasifs (2).

Fig. 1

Fig. 2

Fig. 3

Fig. 4